# EUROPEAN PATENT APPLICATION

(11) **EP 4 796 323 A1**
(43) Date of publication of application: **26.08.2026**
(21) Application number: 25382161.5
(22) Date of filing: 20.02.2025
(51) Int. Cl.: B32B 33/00, C09J 9/00, C09J 123/00, C09J 177/00

(54) **CLEAVABLE THERMOPLASTIC ADHESIVE FOR MULTILAYER LAMINATES**

(71) Applicant: Universidad De Valladolid, 47002 Valladolid (ES); Universidad De Burgos, 09001 Burgos (ES)
(72) Inventor: HERRERO VILLAR, Manuel, 47002 Valladolid (ES); NÚÑEZ CARRERO, Karina Carla, 47002 Valladolid (ES); MERINO SENOVILLA, Juan Carlos, 47002 Valladolid (ES); RODRÍGUEZ PÉREZ, Miguel Ángel, 47002 Valladolid (ES); TORIJA LÓPEZ, Alba, 09001 Burgos (ES); SANTIAGO FERNÁNDEZ, Ainara, 09001 Burgos (ES); TRIGO LÓPEZ, Miriam, 09001 Burgos (ES); SEDANO LABRADOR, Carlos, 09001 Burgos (ES); VALLEJOS CALZADA, Saúl, 09001 Burgos (ES); GARCÍA PÉREZ, José Miguel, 09001 Burgos (ES)
(74) Representative: ABG Intellectual Property Law, S.L.

(57) **Abstract**

The invention relates to a photolabile agent comprising a photolabile molecule substituted with two different groups, wherein one of the groups is an oligomer or polymer selected from polyolefin, polyamide, polyester, polystyrene, PVC, EVOH, EVA and polycarbonate oligomers or polymers, and the other group is either a different oligomer or polymer selected from polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol. This photolabile agent can be used as an adhesive in multilayer laminates.

## Description

### Field of the Invention

The invention belongs to the field of adhesives, particularly cleavable adhesives, for multilayer laminates, such as multilayer laminates for food, cosmetic or pharmaceutical packaging.

### Background of the Invention

Multilayer packaging materials are critical in the packaging industry because of their ability to offer optimized properties that extend product shelf life, improve safety and maintain freshness. These packagings are composed of several layers of materials, such as polyethylene (PE), polyamide (PA) and other polymers, each selected for its specific characteristics, such as mechanical strength, gas and moisture barrier, and flexibility. This multilayered structure allows the packagings to be lightweight and durable, making them ideal for a wide variety of applications, from food and beverages to pharmaceuticals.

In order to maintain adhesion between dissimilar layers, intermediate adhesives that bind two contiguous polymer layers together can be used. These intermediate adhesives usually form irreversible bonds between the polymer layers and, so, do not allow to recover each of the layers individually at the end of the packaging's useful life.

Laminates containing polyolefin and polyamide (PA) layers can be prepared using adhesives based on a polyolefin component grafted with maleic anhydride (e.g. PE-g-MA). During extrusion of the polymeric layers together with the adhesive, weak bonding (such as Van der Waals interaction) between the polyethylene layer and the polyethylene fragment in the adhesive takes place, while the amine group in the PA layer reacts with the anhydride group in the adhesive forming a covalent bond and releasing water in the process.

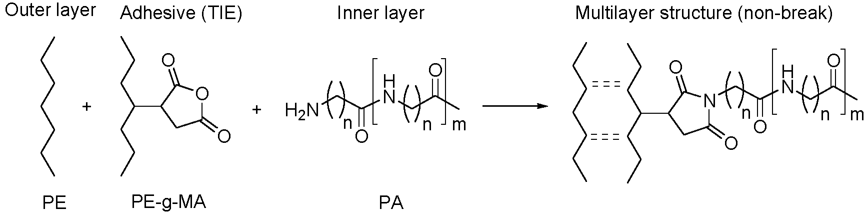

The complexity of laminate materials and the irreversible bonding between the polymer layers present serious challenges in terms of recyclability of these multicomponent materials. This generates a large amount of waste and limits the sustainability of these products.

Basically, all multilayered packagings are incinerated nowadays. Therefore, new adhesives that allow to separate the polymer layers and recycle them at the end of the multilayered packaging's useful life would be highly desirable.

Most of the research works on delamination of multilayer packaging materials are focused on dissolution processes, for example using acids (Ügdüler et al., ChemSusChem 2021, 14, 4198-4213).

On the other hand, Kaiser et al. (Polymers 2020, 12, 2988) and WO 2023/084045 refer to thermoreversibly crosslinking adhesives for laminate materials, based on the formation of Diels-Alder adducts. In order to cleave these adhesives, high temperatures and/or radiation absorbers (such as graphene particles) are required.

Therefore, there is an ongoing need for improvements which would further contribute to address any shortcomings found in the art.

### Summary of the Invention

The invention is based on the finding by the inventors that a photolabile molecule suitably functionalized can be used as a thermoplastic adhesive for multilayer laminates. This adhesive can be cleaved by UV light irradiation thereby allowing separation of the polymeric layers in the laminate.

Therefore, this adhesive allows to recover each of the layers individually at the end of the laminate's useful life, thus enabling the recycling and reuse of these raw materials. Cleave of the adhesive can be triggered when desired by an external stimuli such as UV light, without the need for heat or additional components, which have higher energy costs and could interfere with the quality of the recycled raw material. Compared to the state of the art, where recycling of these materials is achieved through chemical processes (use of solvents or acids) or through energy recovery (incineration), this adhesive represents a more sustainable alternative, since it significantly reduces energy consumption, emission of volatile organic compounds and the use of toxic chemicals. Also, this adhesive can be used with a wide variety of conventional thermoplastic layers for multilayer laminates, without the previous functionalization or modification of said polymeric layers being required. Since the photolabile group can be easily functionalized with any type of oligomer or polymer, or functional group capable of reacting with a polymeric layer, it is compatible with and can be used to adhere any type of polymeric layers typically employed in multilayer laminates. It is also compatible with conventional laminate manufacturing techniques (e.g. coextrusion) and without complex modifications requirements. The mechanical, physical and chemical properties of the final laminates are not altered. Further, the photosensitive bond is as resistant to temperature variations, humidity and chemical exposure as a conventional adhesive, and it is also compatible with environmental regulations and standards for food and medical applications. Finally, the adhesive can be used in several applications where sandwich structures or polymeric laminates requiring an intermediate adhesive are manufactured.

Thus, in a first aspect, the invention is directed to a photolabile agent comprising a photolabile molecule substituted with two different groups, wherein one of the groups is an oligomer or polymer selected from polyolefin, polyamide, polyester, polystyrene, PVC, EVOH, EVA and polycarbonate oligomers or polymers, and the other group is either a different oligomer or polymer selected from polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol.

When the two different groups bonded to the photolabile molecule are oligomers or polymers, the photolabile agent of the present disclosure can be also seen as a block copolymer wherein the blocks in the block copolymer are bonded by a photolabile molecule.

In a second aspect, the invention refers to an adhesive for multilayer laminates that comprises the photolabile agent of the first aspect.

In a third aspect, the invention is directed to the use of the photolabile agent of the first aspect or of the adhesive of the second aspect, for the manufacture of a multilayer laminate material.

In a fourth aspect, the invention relates to a multilayer laminate material comprising at least one first polymeric film or layer, at least one second polymeric film or layer, and at least one adhesive layer sandwiched therebetween, wherein the adhesive layer comprises the photolabile agent of the first aspect or the adhesive of the second aspect.

A fifth aspect of the invention refers to a method of producing a multilayer laminate material, wherein the method comprises:
(a) providing at least one first polymeric film or layer and at least one second polymeric film or layer, and
(b) adhering the at least one first polymeric film or layer and the at least one second polymeric film or layer together by using the photolabile agent of the first aspect or the adhesive of the second aspect.

In a sixth aspect, the invention is directed to a method for separating the at least one first polymeric film or layer and the at least one second polymeric film or layer in the multilayer laminate material of the fifth aspect, wherein the method comprises irradiating the multilayer laminate material with UV light.

### Detailed Description of the Invention

Unless otherwise defined, all technical and scientific terms used herein have the same meaning as commonly understood by a person having ordinary skill in the art to which this disclosure pertains.

As used herein, the singular forms "a" and "the" also include the plural form unless the context clearly dictates otherwise.

The terms "comprise(s)" and variations thereof, encompass the terms "consist(s) essentially of" and "consist(s) of". Therefore, each time the term "comprise(s)" and variations thereof appear herein, they can be replaced with the terms "consist(s) essentially of" and "consist(s) of".

The terms "photolabile" and "photocleavable" are used interchangeable herein and refer to a system (e.g. compound, material, agent, molecule or adhesive) that comprises one or more bonds that can be broken in response to exposure to UV light.

As used herein, the term "multilayer laminate" means a laminate including a variety of different sheet materials. The term "laminate" refers to a composite structure of two or more sheet material layers that have been adhered through a bonding step.

The term "oligomer" or "polymer" is generally used in accordance with the definition made by IUPAC, as in Pure Appl. Chem. 2016; 88 (10-11): 1073-1100 defined. In the context of the present disclosure, oligomer is understood to mean a molecule that has 3 to 50 repeating units, while a polymer is understood to mean a molecule that has more than 50 repeating units.

The term "halogen" refers to bromo, chloro, iodo or fluoro.

The term "C₁₋₆ alkyl" refers to a linear or branched hydrocarbon chain radical consisting of carbon and hydrogen atoms, containing no insaturation, having between 1 and 6, preferably between 1 and 3 ("C₁₋₃ alkyl") carbon atoms and which is attached to the rest of the molecule by a single bond, including for example and in a non-limiting sense, methyl, ethyl, n-propyl, i-propyl, n-butyl, t-butyl, n-pentyl, etc.

The term "C₆₋₁₀ aryl" refers to an aromatic group having between 6 and 10, preferably 6 or 10 carbon atoms, comprising 1 or 2 aromatic nuclei, including for example and in a non-limiting sense, phenyl, naphthyl, etc.

The term "(C₆-C₁₀)aryl(C₁-C₆)alkyl" refers to an aryl group as defined above which is attached to the rest of the molecule through an alkyl group as defined above. Preferably, the (C₆-C₁₀)aryl(C₁-C₆)alkyl is a (C₆)aryl(C₁-C₃)alkyl, such as benzyl.

The term "C₁-C₆ haloalkyl" refers to an alkyl group as defined above wherein at least one of the hydrogen atoms has been replaced by a halogen atom such as, for example CF₃, CCl₃, CHF₂, CH₂F, CF₂CF₃.

As understood in this technical area, there can be a certain degree of substitution on the groups defined herein. Possible substituents include, for example and in a non-limiting sense, halogen, C₁₋₆ alkyl, C₁₋₆ haloalkyl, C₃₋₇ cycloalkyl, C₆₋₁₀ aryl, (C₆₋₁₀)aryl(C₁₋₆)alkyl, CN, NO₂, -N(Rₐ)(R_{b}), -ORₑ, -SR_{d}, -C(O)Rₑ, -C(O)OR_{f}, -C(O)N(R_{g})(Rₕ), -OC(O)Rᵢ, -C(NRⱼ)NRₖRₗ, -SORₘ, -SO₂Rₙ and -SO₂NRₒRₚ; wherein Rₐ, R_{b}, R_{c}, R_{d}, Rₑ, R_{f}, R_{g}, Rₕ, Rᵢ, Rⱼ, Rₖ, Rₗ, Rₘ, Rₙ, Rₒ and Rₚ are independently selected from hydrogen, C₁₋₆ alkyl, C₁₋₆ haloalkyl, C₆₋₁₀ aryl and (C₆₋₁₀)aryl(C₁₋₆)alkyl.

Unless specifically indicated otherwise, or unless clearly inconsistent, all the embodiments disclosed in relation to one aspect of the disclosure are also applicable to the other aspects. Likewise, the present disclosure comprises any combination of the embodiments and preferences described herein, unless indicated otherwise or unless clearly contradicted by the context.

In a first aspect, the invention is directed to a photolabile agent comprising a photolabile molecule substituted with two different groups, wherein one of the groups is an oligomer or polymer selected from the group consisting of polyolefin, polyamide, polyester, polystyrene, PVC, EVOH, EVA and polycarbonate oligomers or polymers, and the other group is either a different oligomer or polymer selected from the group consisting of polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol.

When the group bonded to the photolabile molecule is an oligomer or polymer, said group can interact with groups of a similar nature in one of the polymeric layers or films to be adhered, thus allowing binding of the photolabile agent to said polymeric layer or film. When the group bonded to the photolabile molecule is a functional group selected from carboxylic acid, carboxylic acid anhydride, acid halide, ester, amide, ketone, amine and alcohol, said functional group can react with another group in one of the polymeric layers or films to be adhered, thus allowing binding of the photolabile agent to said polymeric layer or film.

As a result of the binding of the photolabile agent to two different polymeric layers or films (either through an oligomer/polymer or through a functional group capable of reacting with the polymeric layer or film), a multilayer laminate can be obtained wherein the polymeric layers are bonded together through the photolabile agent.

Cleavage of the photolabile molecule allows the separation of the two different groups bonded to the photolabile molecule and, so, of the corresponding polymeric layers or films bonded thereto.

Thus, the photolabile agent of the invention acts as a photolabile adhesive that can keep the polymeric layers or films together when needed and can be cleaved by light irradiation to allow separation of the layers or films when desired.

The photolabile molecule or agent can be dissociated or cleaved by exposure to UV light. In an embodiment, the photolabile molecule or agent cleaves at a wavelength of from 200 to 400 nm. In a further embodiment, it cleaves at a wavelength of from 300 to 400 nm, such as from 350 to 390 nm. In an embodiment, it cleaves at a wavelength of from 360 to 380 nm

In an embodiment, the photolabile molecule comprises a group selected from a 4-coumarinylmethyl group, an *o*-nitrobenzyl group, a 2-(*o*-nitrophenyl)ethyl group and a *p-*hydroxyphenacyl group. These groups are shown below. In a further embodiment, the photolabile molecule comprises a 4-coumarinylmethyl group. In another embodiment, the photolabile molecule comprises an o-nitrobenzyl group.

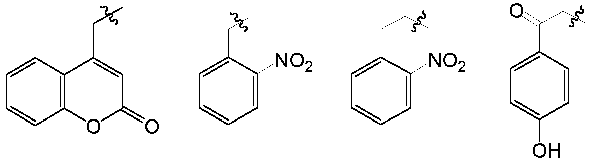

The photolabile molecule may comprise a photolabile group (e.g. a 4-coumarinylmethyl group, an o-nitrobenzyl group, a 2-(*o*-nitrophenyl)ethyl group or a *p-*hydroxyphenacyl group) and two linkers binding the photolabile group to each of the two different groups in the photolabile agent. Therefore, the invention can be directed to a photolabile agent comprising a photolabile group (e.g. a 4-coumarinylmethyl group, an *o-*nitrobenzyl group, a 2-(*o*-nitrophenyl)ethyl group or a *p*-hydroxyphenacyl group) bonded to two different groups through a linker, wherein one of the groups is an oligomer or polymer selected from the group consisting of polyolefin, polyamide, polyester, polystyrene, PVC, EVOH, EVA and polycarbonate oligomers or polymers, and the other group is either a different oligomer or polymer selected from the group consisting of polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol.

In an embodiment, each of the linkers are independently selected from a covalent bond; a C₁₋₆ alkylene group optionally interrupted by and/or terminated in -O-, -OC(O)-, -OC(O)O-, -OC(O)NR'-, -NR'-, -NR'C(O)-, -NR'C(O)O-, -C(O)-, -C(O)O-, -

C(O)NR'-, and optionally substituted by halogen, C₁₋₆ haloalkyl, C₆₋₁₀ aryl, (C₆₋₁₀)aryl(C₁₋₆)alkyl, CN, NO₂, -N(Rₐ)(R_{b}), -OR_{c}, -C(O)R_{d}, -C(O)ORₑ, -C(O)N(R_{f})(R_{g}) or -OC(O)Rₕ; wherein R', Rₐ, R_{b}, R_{c}, R_{d}, Rₑ, R_{f}, R_{g} and Rₕ are independently selected from hydrogen and C₁₋₆ alkyl; a succinimide group or a maleimide group.

In addition to the two different groups in the photolabile agent, optionally bonded through a linker, the photolabile molecule may be further substituted with one or more, for example one, two or three, functional groups. Suitable functional groups include halogen, C₁₋₆ alkyl, -OR" and -NR"₂, wherein each R" is independently selected from hydrogen and C₁₋₆ alkyl.

In an embodiment, the invention is directed to a photolabile agent of formula (I)

P₁-L₁-A-L₂-P₂ (I)

wherein
A is a photolabile group;
L₁ and L₂ represent linkers as defined above;
P₁ is an oligomer or polymer selected from the group consisting of polyolefin, polyamide, polyester, polystyrene, PVC, EVOH, EVA and polycarbonate oligomers or polymers; and
P₂ is either an oligomer or polymer selected from the group consisting of polyolefin, polyamide, polyester, polystyrene, PVC, EVOH, EVA and polycarbonate oligomers or polymers different from P₁, or a functional group selected from carboxylic acid, carboxylic acid anhydride, acid halide, ester, amide, ketone, amine and alcohol.

In some embodiments, the photolabile group (e.g. A) is selected from a 4-coumarinylmethyl group, an o-nitrobenzyl group, a 2-(*o*-nitrophenyl)ethyl group and a *p-*hydroxyphenacyl group; preferably, a 4-coumarinylmethyl group or an *o*-nitrobenzyl group. The above groups can be unsubstituted or substituted; for example, they may be optionally substituted with one or more, for example one, two or three, functional groups. Suitable functional groups include halogen, C₁₋₆ alkyl, -OR' and -NR'₂, wherein each R' is independently selected from hydrogen and C₁₋₆ alkyl.

The linkers can be the same or different linkers. In an embodiment, each of the linkers (e.g. L₁ and L₂) is independently selected from a covalent bond; a C₁₋₆ alkylene group optionally interrupted by and/or terminated in -O-, -OC(O)-, -OC(O)O-, -OC(O)NR'-, -NR'-, -NR'C(O)-, -NR'C(O)O-, -C(O)-, -C(O)O-, - C(O)NR'-, and optionally substituted by halogen, C₁₋₆ haloalkyl, C₆₋₁₀ aryl, (C₆₋₁₀)aryl(C₁₋₆)alkyl, CN, NO₂, -N(Rₐ)(R_{b}), -OR_{c}, -C(O)R_{d}, -C(O)ORₑ, -C(O)N(R_{f})(R_{g}) or -OC(O)Rₕ; wherein R', Rₐ, R_{b}, R_{c}, R_{d}, Rₑ, R_{f}, R_{g} and Rₕ are independently selected from hydrogen and C₁₋₆ alkyl; a succinimide or a maleimide.

According to an embodiment, each of the linkers (e.g. L₁ and L₂) are independently selected from succinimide, maleimide or a linker of formula:

-Y¹-(CH₂)_{q}-Y²-

wherein
each Y¹ and Y² are independently a bond, -O-, -OC(O)-, -OC(O)O-, -OC(O)NR'-, -NR'-, -NR'C(O)-, -NR'C(O)O-, -C(O)-, -C(O)O-, -C(O)NR'- or C₁₋₆ alkylene, wherein the C₁₋₆ alkylene may be optionally substituted with halogen, C₁₋₆ haloalkyl, C₆₋₁₀ aryl, (C₆₋₁₀)aryl(C₁₋₆)alkyl, CN, NO₂, -N(Rₐ)(R_{b}), -OR_{c}, -C(O)R_{d}, -C(O)ORₑ, - C(O)N(R_{f})(R_{g}) or -OC(O)Rₕ, and R', Rₐ, R_{b}, R_{c}, R_{d}, Rₑ, R_{f}, R_{g} and Rₕ are independently selected from hydrogen and C₁₋₆ alkyl; and
q is 0, 1, 2, 3, 4, 5 or 6.

In an embodiment, each of the linkers (e.g. L₁ and L₂) can be independently selected from a covalent bond, -(CH₂)ₚ-, -O-, -O-(CH₂)ₚ-, -O-(CH₂)ₚ-C(O)-, -OC(O)-, -OC(O)-(CH₂)ₚ-, -OC(O)O-, -OC(O)O-(CH₂)ₚ-, -OC(O)NR'-, -OC(O)NR'-(CH₂)ₚ-, -NR'-, -NR'-(CH₂)ₚ-, -NR'-(CH₂)ₚ-C(O)-, -NR'C(O)-, -NR'-C(O)-(CH₂)ₚ-, -NR'C(O)O-, - NR'C(O)O-(CH₂)ₚ-, -OC(O)-CH₂-CH(COOH)-, -OC(O)-CH(CH₂COOH)-, -C(O)-, - C(O)-(CH₂)ₚ-, -C(O)-(CH₂)ₚ-C(O)-, -C(O)O-, -C(O)O-(CH₂)ₚ-, -C(O)O-(CH₂)ₚ-C(O)-, - C(O)NR'-, -C(O)NR'-(CH₂)ₚ-, -C(O)NR'-(CH₂)ₚ-C(O)-, succinimide and maleimide; wherein each R' is independently selected from hydrogen and C₁₋₆ alkyl, and wherein p is 1, 2, 3, 4 or 5.

In some embodiments, the linkers (e.g. L₁ and L₂) are independently selected from a covalent bond, -(CH₂)ₚ-, -O-, *-O-(CH₂)ₚ-, *-O-(CH₂)ₚ-C(O)-, *-OC(O)-, *-OC(O)-(CH₂)ₚ-, - OC(O)O-, *-OC(O)O-(CH₂)ₚ-, *-OC(O)NR'-, *-OC(O)NR'-(CH₂)ₚ-, -NR'-, *-NR'-(CH₂)ₚ-, *-NR'-(CH₂)ₚ-C(O)-, *-NR'C(O)-, *-NR'-C(O)-(CH₂)ₚ-, *-NR'C(O)O-, *-NR'C(O)O-(CH₂)ₚ-, *-OC(O)-CH₂-CH(COOH)-, *-OC(O)-CH(CH₂COOH)-, -C(O)-, *-C(O)-(CH₂)ₚ-, *-C(O)-(CH₂)ₚ-C(O)-, *-C(O)O-, *-C(O)O-(CH₂)ₚ-, *-C(O)O-(CH₂)ₚ-C(O)-, *-C(O)NR'-, *-C(O)NR'-(CH₂)ₚ-, *-C(O)NR'-(CH₂)ₚ-C(O)-, *-(CH₂)ₚ-C(O)-, *-(CH₂)ₚ-C(O)O-, *-(CH₂)ₚ-C(O)NR'-, 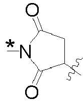 and 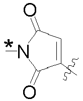 ; wherein each R' is independently selected from hydrogen and C₁₋₆ alkyl; p is 1, 2, 3, 4 or 5; and * means the point of attachment of the linker to the photolabile group.

According to an embodiment, one of the linkers (e.g. one of L₁ and L₂) is selected from -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -NR'-, *-NR'-(CH₂)ₚ-, *-NR'-(CH₂)ₚ-C(O)-, *-NR'C(O)-, *-NR'-C(O)-(CH₂)ₚ-, *-NR'C(O)O-, *-NR'C(O)O-(CH₂)ₚ-, *-OC(O)-CH₂-CH(COOH)-, *-OC(O)-CH(CH₂COOH)-, 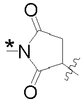 and 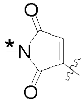 ; and the other linker is selected from a covalent bond, -(CH₂)ₚ-, -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -NR'-, *-NR'-(CH₂)ₚ-, *-NR'-(CH₂)ₚ-C(O)-, *-NR'C(O)-, *-NR'-C(O)-(CH₂)ₚ-, *-NR'C(O)O-, *-NR'C(O)O-(CH₂)ₚ-, *-OC(O)-CH₂-CH(COOH)-, *-OC(O)-CH(CH₂COOH)-, -C(O)-, *-C(O)-(CH₂)ₚ-, *-C(O)-(CH₂)ₚ-C(O)-, *-C(O)O-, *-C(O)O-(CH₂)ₚ-, *-C(O)O-(CH₂)ₚ-C(O)-, *-C(O)NR'-, *-C(O)NR'-(CH₂)ₚ-, *-C(O)NR'-(CH₂)ₚ-C(O)-, *-(CH₂)ₚ-C(O)-, *-(CH₂)ₚ-C(O)O-, *-(CH₂)ₚ-C(O)NR'-, 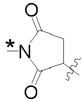 and 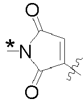 ; wherein each R' is independently selected from hydrogen and C₁₋₆ alkyl; p is 1, 2, 3, 4 or 5; and * means the point of attachment of the linker to the photolabile group.

In an embodiment, each R' is independently selected from hydrogen and C₁₋₃ alkyl. In an embodiment, R' is hydrogen.

In an embodiment, p is selected from 1, 2, 3, 4 or 5, or even it is selected from 1, 2 or 3. In an embodiment, p is 1 or 2. In another embodiment, p is 1.

According to an embodiment, the linkers (e.g. L₁ and L₂) are independently selected from a covalent bond, -(CH₂)ₚ-, -O-, *-O-(CH₂)ₚ-C(O)-, *-OC(O)-, *-OC(O)NR'-, -NR'-, *-NR'-(CH₂)ₚ-, *-NR'-(CH₂)ₚ-C(O)-, *-NR'C(O)-, *-OC(O)-CH₂-CH(COOH)-, *-OC(O)-CH(CH₂COOH)-, -C(O)-, *-C(O)O-, *-C(O)NR'-, *-(CH₂)ₚ-C(O)-, *-(CH₂)ₚ-C(O)O-, *-(CH₂)ₚ-C(O)NR'-, and 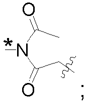 wherein R', p and * are as defined above.

According to an embodiment, the photolabile molecule that comprises a 4-coumarinylmethyl group can be of formula (II):

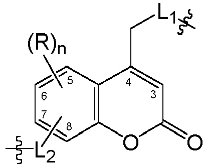

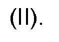

In an embodiment, L₂ is bonded to position 6, 7 or 8 of the coumarin skeleton. In a further embodiment, L₂ is bonded to position 7 of the coumarin skeleton and so the photolabile molecule that comprises a 4-coumarinylmethyl group has formula (II'):

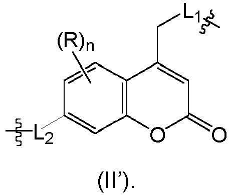

The photolabile molecule that comprises an o-nitrobenzyl group can be of formula (III):

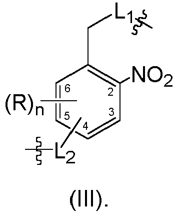

In an embodiment, the L₂ is bonded to position 4 or 5 of the o-nitrobenzyl group. In a further embodiment, L₂ is bonded to position 4 and so the photolabile molecule that comprises a o-nitrobenzyl group has formula (III'):

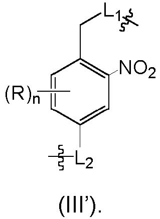

The photolabile molecule that comprises an o-nitrobenzyl group can be of formula (IV):

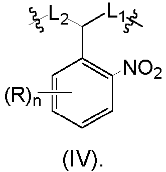

The photolabile molecule that comprises a 2-(*o*-nitrophenyl)ethyl group can be of formula (V):

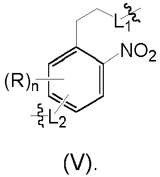

The photolabile molecule that comprises a *p*-hydroxyphenacyl group can be of formula (VI):

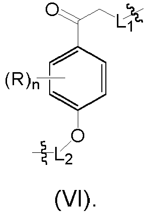

In formula (II), (II'), (III), (III'), (IV), (V) and (VI):
L₁ and L₂ represent linkers as defined above;
each R is independently selected from halogen, C₁₋₆ alkyl, -OR" and -NR"₂;
n is 0, 1, 2 or 3;
each R" is independently selected from hydrogen and C₁₋₆ alkyl; and 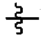 represents the bond that is the point of attachment to the two different groups
of the photolabile agent (e.g. P₁ and P₂).

In particular embodiments of formula (II), (II'), (III), (III'), (IV), (V) and (VI):
L₁ is selected from -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -NR'-, *-NR'-(CH₂)ₚ-, *-NR'-(CH₂)ₚ-C(O)-, *-NR'C(O)-, *-NR'-C(O)-(CH₂)ₚ-, *-NR'C(O)O-, *-NR'C(O)O-(CH₂)ₚ-, *-OC(O)-CH₂-CH(COOH)-, *-OC(O)-CH(CH₂COOH)-, 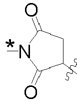 and 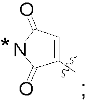
L₂ is selected from a bond, -(CH₂)ₚ-, -NR'-, *-NR'-(CH₂)ₚ-, *-NR'-(CH₂)ₚ-C(O)-, *-NR'-C(O)-, *-NR'-C(O)-(CH₂)ₚ-, *-NR'C(O)O-, *-NR'C(O)O-(CH₂)ₚ-, -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -C(O)-, *-C(O)O-, *-C(O)NR'-, *-(CH₂)ₚ-C(O)-, 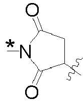 and 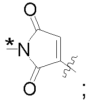
each R is independently selected from halogen, C₁₋₆ alkyl, -OR" and -NR"₂;
n is 0, 1, 2 or 3;
each R' is independently selected from hydrogen and C₁₋₆ alkyl;
each R" is independently selected from hydrogen and C₁₋₆ alkyl;
p is 1, 2, 3, 4 or 5;
* means the point of attachment to the rest of the photolabile molecule; and 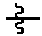 represents the bond that is the point of attachment to the two different groups of the photolabile agent (e.g. P₁ and P₂).

In particular embodiments of formula (II), (II'), (III), (III'), (IV), (V) and (VI):
- L₁ is selected from -O-, *-O-(CH₂)ₚ-C(O)-, *-OC(O)-, -OC(O)O-, *-OC(O)NR'-, -NR'-, *-NR'-(CH₂)ₚ-C(O)-, *-OC(O)-CH₂-CH(COOH)-, *-OC(O)-CH(CH₂COOH)-, 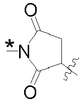 and 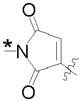 ; and/or
- L₂ is selected from a bond, -(CH₂)ₚ-, -NR'-, *-NR'-(CH₂)ₚ-, *-NR'-(CH₂)ₚ-C(O)-, *-NR'C(O)-, 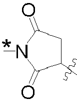 and 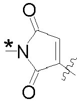 ; and/or
- n is 0, 1 or 2; and/or
- each R' is independently selected from hydrogen and C₁₋₃ alkyl; and/or
- each R" is independently selected from hydrogen and C₁₋₃ alkyl; and/or
- p is 1, 2 or 3.

In particular embodiments of formula (II), (II'), (III), (III'), (IV), (V) and (VI):
- L₁ is selected from -O-, *-OC(O)-, *-OC(O)NR'-, *-OC(O)-CH₂-CH(COOH)-, *-OC(O)-CH(CH₂COOH)- and 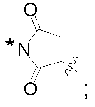 and/or.
- L₂ is selected from a bond, -(CH₂)ₚ-, -NR'-, *-NR'-(CH₂)ₚ-, *-NR'-(CH₂)ₚ-C(O)-, and 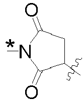 ; and/or
- p is 1 or 2, for example 1; and/or
- R' is hydrogen; and/or
- R" is hydrogen; and/or
- n is 0.

In an embodiment, the photolabile molecule has formula (II) or (II'), wherein:
- L₁ is selected from -O-, *-O-(CH₂)ₚ-C(O)-, *-OC(O)-, -OC(O)O-, *-OC(O)NR'-, -NR'-, *-NR'-(CH₂)ₚ-C(O)-, *-OC(O)-CH₂-CH(COOH)-, *-OC(O)-CH(CH₂COOH)- and 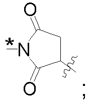
- L₂ is selected from a bond, -(CH₂)ₚ-, -NR'-, *-NR'-(CH₂)ₚ-, *-NR'-(CH₂)ₚ-C(O)-, *-NR'C(O)- and 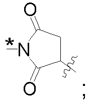
- n is 0, 1 or 2, for example 0;
- each R' is independently selected from hydrogen and C₁₋₃ alkyl, for example hydrogen;
- each R" is independently selected from hydrogen and C₁₋₃ alkyl, for example hydrogen; and
- p is 1, 2 or 3, for example 1 or 2.

In an embodiment, the photolabile molecule has formula (III) or (III'), wherein:
- L₁ is selected from -O-, *-O-(CH₂)ₚ-C(O)-, *-OC(O)-, -OC(O)O-, *-OC(O)NR'-, -NR'-, *-NR'-(CH₂)ₚ-C(O)-, *-OC(O)-CH₂-CH(COOH)-, *-OC(O)-CH(CH₂COOH)- and 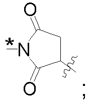
- L₂ is selected from a bond, -(CH₂)ₚ-, -NR'-, *-NR'-(CH₂)ₚ-, *-NR'-(CH₂)ₚ-C(O)-, *-NR'C(O)- and 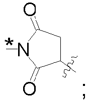
- n is 0, 1 or 2, for example 0;
- each R' is independently selected from hydrogen and C₁₋₃ alkyl, for example hydrogen;
- each R" is independently selected from hydrogen and C₁₋₃ alkyl, for example hydrogen; and
- p is 1, 2 or 3, for example 1 or 2.

In an embodiment, the photolabile molecule has formula (IV), wherein:
- L₁ is selected from -O-, *-O-(CH₂)ₚ-C(O)-, *-OC(O)-, -OC(O)O-, *-OC(O)NR'-, -NR'-, *-NR'-(CH₂)ₚ-C(O)-, *-OC(O)-CH₂-CH(COOH)-, *-OC(O)-CH(CH₂COOH)- and 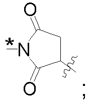
- L₂ is selected from a bond, -(CH₂)ₚ-, -NR'-, *-NR'-(CH₂)ₚ-, *-NR'-(CH₂)ₚ-C(O)-, *-NR'C(O)- and 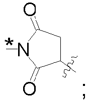
- n is 0, 1 or 2, for example 0;
- each R' is independently selected from hydrogen and C₁₋₃ alkyl, for example hydrogen;
- each R" is independently selected from hydrogen and C₁₋₃ alkyl, for example hydrogen; and
- p is 1, 2 or 3, for example 1 or 2.

In a further embodiment, the photolabile molecule has formula (IV), wherein L₁ is 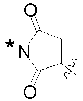 and L₂ is -(CH₂)ₚ-;

The photolabile molecule is bonded to two different groups (e.g. P₁ and P₂), wherein one of the groups is an oligomer or polymer selected from the group consisting of polyolefin, polyamide, polyester, polystyrene, PVC, EVOH, EVA and polycarbonate oligomers or polymers, and the other group is either a different oligomer or polymer selected from the group consisting of polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol.

The oligomers or polymers attached to the photolabile molecule are selected to be of a similar nature of the polymeric layers or films of the multilayer laminate material to be adhered. For example, if a polyolefin layer or film and a polyamide layer or film are to be adhered to form the multilayer laminate material, the oligomers or polymers attached to the photolabile molecule can be selected from a polyolefin oligomer or polymer and a polyamide oligomer or polymer. In this way, due to the interactions between groups of similar nature, the polyolefin oligomer or polymer attached to the photolabile molecule binds to the polyolefin layer or film and the polyamide oligomer or polymer attached to the photolabile molecule binds to the polyamide layer or film, thereby adhering the two polymeric layers or films of the multilayer laminate material.

Alternatively, one of the two different groups attached to the photolabile molecule (e.g. P₁ or P₂) may be a functional group capable of reacting with one of the polymeric layers or films to be adhered, thus allowing binding of the photolabile agent to said polymeric layer or film. This functional group is selected from:
carboxylic acid (-C(O)OH),
carboxylic acid anhydride (including acyclic and cyclic anhydrides; e.g. -C(O)O-C(O)-R, wherein R is C₁₋₆ alkyl; succinic anhydride, maleic anhydride, phthalic anhydride or glutaric anhydride),
acid halide (-C(O)OX, wherein X is halogen, such as CI or Br),
ester (-C(O)OR, wherein R is C₁₋₆ alkyl),
amide (-C(O)NR₂, wherein each R is independently selected from H and C₁₋₆ alkyl), ketone (-C(O)R, wherein R is C₁₋₆ alkyl),
amine, (-NR₂, wherein each R is independently selected from H and C₁₋₆ alkyl), and alcohol (-OH).

In an embodiment, said group attached to the photolabile molecule (e.g. P₁ or P₂) may be selected from carboxylic acid (-C(O)OH), carboxylic acid anhydride (including acyclic and cyclic anhydrides; e.g. -C(O)O-C(O)-R, wherein R is C₁₋₆ alkyl; succinic anhydride, maleic anhydride, phthalic anhydride or glutaric anhydride), and acid halide (-C(O)OX, wherein X is halogen, such as Cl or Br). In an embodiment, said group may be a carboxylic acid (-C(O)OH) or a succinic anhydride. In a further embodiment, said group may be a carboxylic acid (-C(O)OH).

According to an embodiment, one of the two different groups attached to the photolabile molecule (e.g. one of P₁ or P₂) is an oligomer or polymer selected from polyolefin, polyamide, polyester, polystyrene, PVC, EVOH, EVA and polycarbonate oligomers or polymers, and the other group (e.g. one of P₁ or P₂) is a functional group selected from carboxylic acid, carboxylic acid anhydride, acid halide, ester, amide, ketone, amine and alcohol.

According to another embodiment, the two different groups attached to the photolabile molecule (e.g. P₁ and P₂) are an oligomer or polymer independently selected from polyolefin, polyamide, polyester, polystyrene, PVC, EVOH, EVA and polycarbonate oligomers or polymers.

The oligomers or polymers that may be attached to the photolabile molecule are not limited to any particular size. For example, photolabile agents of high molecular weight can be used (e.g. 50.000-1.000.000 g/mol), which can bind to the polymeric layers or films of the multilayer laminate material through extrusion lamination. Photolabile agents of lower molecular weight (e.g. <50.000 g/mol), can be also used as an adhesive to bind the polymeric layers or films of the multilayer laminate material by adhesive lamination. Due to the high temperature and/or pressure typically used in the process for the manufacture of multilayer laminate materials, the photolabile agent binds to the polymeric layers or films (as a result of the compatibility of each of the oligomers/polymers or the functional group in the photolabile agent with the material of the corresponding polymeric layer of film to which it is going to be bonded).

In an embodiment, each of the oligomers or polymers in the photolabile agent may independently have at least 3 repeating units, or even at least 5 repeating units. In another embodiment, the oligomers or polymers independently have at least 10 repeating units, or even at least 20 repeating units. In a further embodiment, the oligomers or polymers independently have at least 50 repeating units.

According to an embodiment, each of the oligomers or polymers in the photolabile agent may independently have 3-50.000 repeating units, or even 5-50.000 repeating units. In an embodiment, the oligomers or polymers independently have 10-35.000 repeating units. In a further embodiment, they independently have 20-35.000 repeating units. In another embodiment, they independently have 50-35.000 repeating units.

In an embodiment, the photolabile agent may have a molecular weight of at least 500 g/mol, or even at least 800 g/mol. In another embodiment, it has a molecular weight of at least 1.000 g/mol, or even at least 5.000 g/mol. In an embodiment, it has a molecular weight of at least 10.000 g/mol. In a further embodiment, it has a molecular weight of at least 50.000 g/mol.

According to an embodiment, the photolabile agent may have a molecular weight of 500-1.000.000 g/mol, or even 800-1.000.000 g/mol. In an embodiment, it has a molecular weight of 1.000-800.000 g/mol. In another embodiment, it has a molecular weight of 5.000-600.000 g/mol. In a further embodiment, it has a molecular weight of 10.000-500.000 g/mol. In another embodiment, it has a molecular weight of 10.000-1.000.000 g/mol.

Unless otherwise specified, the term "molecular weight" as used herein refers to the weight average molecular weight. The weight average molecular weight is determined by gel permeation chromatography.

Suitable oligomers or polymers that can be used to functionalize the photolabile molecule include polyolefin (including maleic anhydride grafted polyolefins, e.g. PE - including HDPE, MDPE, LDPE, LLDPE, VLDPE, ULDPE, PE-g-MA -, PP, PP-g-MA and copolymers thereof), polyamide (e.g., PA6, PA66, PA16, PA46, PA610, PA11, PA12), polyester (e.g. PET, PLA, PEN, PTT, PBT), polystyrene, PVC, EVOH, EVA (including maleic anhydride grafted EVA) and polycarbonate (e.g. poly(bisfenol A carbonate)) oligomers or polymers. In an embodiment, said oligomers or polymers are selected from polyolefin homopolymers, copolymers of two polyolefins and maleic anhydride grafted polyolefins; polyamide homopolymers, polyester homopolymers, polystyrene homopolymers, PVC homopolymers, EVOH homopolymers, EVA homopolymers and maleic anhydride grafted EVA, and polycarbonate homopolymers. In an embodiment, the oligomer or polymer may be substituted at the end of the chain (the one opposed to the photolabile molecule) with a C₁₋₆ alkyl group.

Typical polyolefin, polyamide, polyester, polystyrene, PVC, EVOH, EVA and polycarbonate oligomers or polymers have the formulae shown below:
- polyolefin: 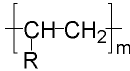 , wherein R is hydrogen or C₁₋₆ alkyl; 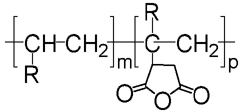 , wherein R is hydrogen or C₁₋₆ alkyl;
- polyamide: 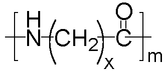 , wherein x is an integer from 1 to 12; 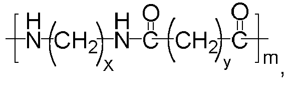 wherein x and y are independently an integer from 1 to 12;
- polyester: 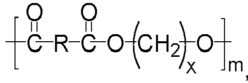 wherein R is C₁₋₆ alkyl, phenyl or naphthyl, and x is an integer from 1 to 4; 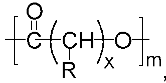 wherein R is hydrogen or C₁₋₆ alkyl, and x is an integer from 1 to 4;
- polystyrene: 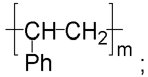
- PVC: 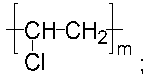
- EVOH: 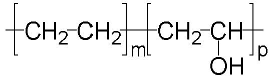
- EVA: 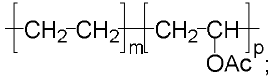 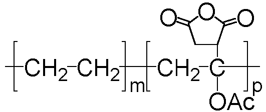
- polycarbonate:

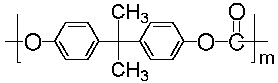

In the above formulae, m and p are integers that represent the amount of repeating units in the oligomer or polymer. In an embodiment, m+p (or m if there is no p) is an integer from 3 to 50.000, for example from 10 to 35.000 or even from 50 to 35.000.

According to an embodiment, one of the groups in the photolabile agent of the invention is a polar oligomer or polymer (e.g. polyamide, polyester, polycarbonate, PVC, EVOH, EVA) or a functional group selected from carboxylic acid, carboxylic acid anhydride, acid halide, ester, amide, ketone, amine and alcohol and the other one is an apolar oligomer or polymer (e.g. polyolefin, polystyrene).

In a particular embodiment, one of the groups in the photolabile agent of the invention is a polyolefin oligomer or polymer (e.g. PE, HDPE, MDPE, LDPE, LLDPE, VLDPE, ULDPE, PE-g-MA, PP, PP-g-MA, PE/PP copolymers) and the other one is a polyamide (e.g., PA6, PA66, PA16, PA46, PA610, PA11, PA12), a polyester oligomer or polymer (e.g. PET, PLA, PEN, PTT, PBT), or a functional group selected from carboxylic acid, carboxylic acid anhydride, acid halide, ester, amide, ketone, amine and alcohol. In a particular embodiment, one of the groups in the photolabile agent is a polyolefin oligomer or polymer and the other one is a polyamide or a polyester oligomer or polymer. In another particular embodiment, one of the groups in the photolabile agent is a polyolefin oligomer or polymer and the other one is a functional group selected from carboxylic acid, carboxylic acid anhydride, acid halide, ester, amide, ketone, amine and alcohol, such as carboxylic acid or carboxylic acid anhydride. The photolabile agent of the disclosure can be used as a cleavable adhesive, In particular, it can be used as an adhesive for multilayer laminates, for example for multilayer laminates for packaging, such as for packaging food, cosmetics or pharmaceuticals.

Therefore, the invention also refers to an adhesive, in particular an adhesive for multilayer laminates, which comprises a photolabile molecule substituted with two different groups, wherein one of the groups is an oligomer or polymer selected from polyolefin, polyamide, polyester, polystyrene, PVC, EVOH, EVA and polycarbonate oligomers or polymers, and the other group is either a different oligomer or polymer selected from polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol, as defined herein.

The invention is also directed to an adhesive or to an adhesive composition, in particular an adhesive or an adhesive composition for multilayer laminates, wherein the adhesive or adhesive composition comprises a photolabile agent as defined herein. In an embodiment, the adhesive or adhesive composition may further include a solvent (e.g. alcohols, esters, ketones, toluene, etc.).

In a further aspect, the invention is directed to the use of the photolabile agent of the disclosure as an adhesive; in particular, as an adhesive for multilayer laminates, for example for multilayer laminates for packaging, such as for packaging food, cosmetics or pharmaceuticals.

Another aspect of the invention refers to a multilayer laminate material comprising at least one first polymeric film or layer, at least one second polymeric film or layer, and at least one adhesive layer sandwiched therebetween, wherein the adhesive layer comprises the photolabile agent of the disclosure as defined above or the adhesive or adhesive composition of the disclosure as defined above.

In an embodiment, the at least one first and the at least one second polymeric substrate or film in the multilayer laminate material comprise independently a polymer selected from the group consisting of polyolefin, polyamide, polyester, polystyrene, PVC, EVOH, EVA, polycarbonate.

The oligomers or polymers attached to the photolabile molecule can be chosen to be of a same or similar chemical nature as the at least one first and second polymeric substrates or films in the multilayer laminate material, so that the each of said oligomers or polymers bind directly to the corresponding polymeric substrate or film of the same or similar chemical nature during the manufacture of the multilayer laminate material.

According to an embodiment, one of the groups in the photolabile agent of the invention is a polar oligomer or polymer (e.g. polyamide, polyester, polycarbonate, PVC, EVOH, EVA) or a functional group selected from carboxylic acid, carboxylic acid anhydride, acid halide, ester, amide, ketone, amine and alcohol, and the other group is an apolar oligomer or polymer (e.g. polyolefin, polystyrene), and one of the at least one first and second polymeric substrates or films in the multilayer laminate material comprises a polar polymer (e.g. polyamide, polyester, polycarbonate, PVC, EVOH, EVA) and the other one comprises an apolar polymer (e.g. polyolefin, polystyrene).

In a particular embodiment, one of the groups in the photolabile agent of the invention is a polyolefin oligomer or polymer and the other one is a functional group selected from carboxylic acid, carboxylic acid anhydride and acid halide or is a polyamide or a polyester oligomer or polymer, and one of the at least one first and second polymeric substrates or films in the multilayer laminate material comprises a polyolefin polymer and the other one comprises a polyamide or a polyester polymer.

.According to an embodiment, each of the at least one first and the at least one second polymeric layer or film in the multilayer laminate material has independently a thickness of 1-300 µm, such as 5-200 µm. In an embodiment, the adhesive layer in the multilayer laminate material has a thickness of 1-200 µm, such as 2-150 µm.

The multilayer laminate material can be a multilayer laminate material for packaging, such as for food, cosmetic or pharmaceutical packaging.

Another aspect of the invention refers to a method of producing the above mentioned multilayer laminate material, wherein the method comprises:
(a) providing the at least one first polymeric film or layer and at the least one second polymeric film or layer, and
(b) adhering the at least one first polymeric film or layer and the at least one second polymeric film or layer together by using the photolabile agent of the disclosure or the adhesive or adhesive composition of the disclosure.

Step (b) can be performed, for example, by conventional lamination methods known in the art, such as extrusion lamination, dry lamination, adhesive (wet) lamination, thermal lamination or hot-melt lamination.

In an embodiment, step (b) can be performed at a pressure of 1-50 MPa, such as 1-20 MPa. In an embodiment, step (b) can be performed at a temperature of 50-350°C, such as 100-300°C.

Due to the presence of the photolabile molecule, the photolabile agent of the disclosure or the adhesive or adhesive composition of the disclosure have photocleavable properties. Therefore, upon light UV irradiation, said agent or adhesive cleaves leading to the separation of the polymeric layers or films bonded thereto.

Accordingly, the invention is also directed to a method for separating the at least one first polymeric film or layer and the at least one second polymeric film or layer in the multilayer laminate material defined herein, wherein the method comprises irradiating the multilayer laminate material with UV light.

In a particular embodiment, the multilayer laminate material is irradiated with UV light with a wavelength between 200 and 400 nm, or even between 300 and 400 nm. In a particular embodiment, the multilayer laminate material is irradiated with UV light with a wavelength between 330 and 400 nm. In a further embodiment, it is irradiated with UV light with a wavelength between 350 and 390 nm.

The multilayer laminate material can be irradiated with UV light for a time of between 1 h and 50 h, for example, between 2 h and 25 h.

It should be understood that the scope of the present disclosure includes all the possible combinations of embodiments disclosed herein.

### Examples

The examples were designed as follows:
A. Low molecular weight model molecules. In this step, it was proved that it is possible to functionalize photolabile molecules with several thermoplastic oligomeric or polymeric chains and then cleave said chains with UV irradiation.
B. Adhesive. In this step, it was proved that it is possible to prepare and cleave a photolabile adhesive including higher molecular weight polymeric chain(s).
C. Multilayer laminate. In this step, it was proved that the adhesives from step B can be used to bind two polymeric layers together and that the layers can be separated again by UV irradiation.

### A. LOW MOLECULAR WEIGHT MODEL MOLECULES

### Example 1: Synthesis of amide chain with one amide bond (Compound 1).

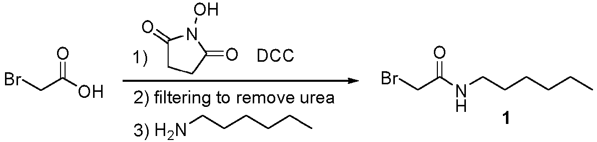

Bromoacetic acid (3 g, 21.6 mmol), N-hydroxy succinimide (2.56 g, 22.3 mmol), DCC (5.35 g, 25.9 mmol) and dioxane (40 mL) were added to a 250 mL round bottom flask. It was allowed to react under stirring for 2 h. Then, it was filtered to remove the precipitated solid residue and n-hexylamine (2.95 mL, 21.6 mmol) was added, under stirring, over the filtrate liquid. It was left to react at room temperature for 16 h. The resulting solid residue was filtered off and the solvent removed at the rotary evaporator. AcOEt was added and the mixture washed with acetic acid (10%), Na₂CO₃ (5%) and NaCl (sat.). The organic phase was dried with MgSO₄, filtered and the solvent was removed at the rotary evaporator. Compound 1 was used in the next step without further purification (0.57 g, 2.05 mmol, 79% yield). The spectroscopic data of compound 1 were in agreement with those found in the literature (He et al., Mater. Chem. Front. 2023, 7, 2454-2463).

### Example 2: Synthesis of amide chain with two amide bonds (Compound 4).

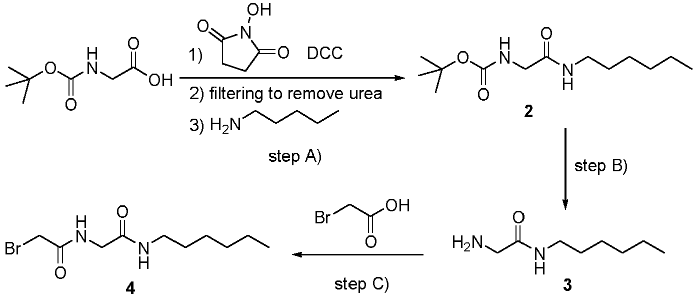

### Step A)

Gly-NH-Boc (3 g, 17.1 mmol), N-hydroxy succinimide (2.04 g, 17.7 mmol), DCC (4.23 g; 20.5 mmol) and dioxane (40 mL) were added to a 250 mL round bottom flask. It was allowed to react with stirring for 2 h. Then, it was filtered to remove the precipitated solid residue and n-hexylamine (2.34 mL; 17.1 mmol) was added, under stirring, over the filtrate liquid. It was left to react at room temperature for 16 h. The resulting solid residue was filtered off and the solvent removed at the rotary evaporator. AcOEt was added and the mixture washed with acetic acid (10%), Na₂CO₃ (5%) and NaCl (sat.). The organic phase was dried with MgSO₄, filtered and the solvent was removed at the rotary evaporator. Compound **2** was used in the next step without further purification.

### Step B)

Dioxane (13.2 mL) and HCl (6.7 mL, 37%) were added to the round bottom flask containing compound **2.** It was left to shake for 1 h at room temperature. Subsequently, 20 mL of H₂O was added and Na₂CO₃ was added in small portions, observing the generation of bubbling, until the aqueous solution had a pH > 7. The resulting solution was saturated with NaCl and extracted with AcOEt (3 × 20 mL). The organic phase was dried with MgSO₄ and the solvent removed at the rotary evaporator. Compound **3** was used in the next step without purification.

### Step C)

Bromoacetic acid (1.2 g, 8.63 mmol), N-hydroxy succinimide (1.02 g, 8.9 mmol), DCC (2.137 g, 10.36 mmol) and dioxane (20 mL) were added to a 250 mL round bottom flask. It was allowed to react with stirring for 2 h. Then, it was filtered to remove the precipitated solid residue and amine 3 (1.37 mL, 8.63 mmol) was added, under stirring, over the filtrate liquid. It was left to react at room temperature for 16 h. The resulting solid residue was filtered off which was compound **4,** which is used in the next step without further purification (1.22 g, 51% overall yield from Gly-NH-Boc).

### Example 3: Synthesis of amide chain with three amide bonds (Compound 7).

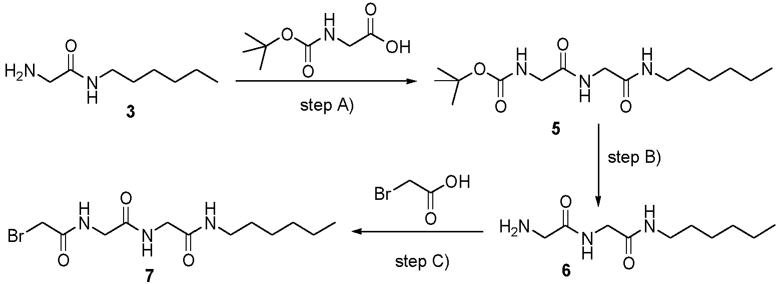

### Step A)

Gly-NH-Boc (1.23 g, 7 mmol), N-hydroxy succinimide (0.84 g, 7.3 mmol), DCC (1.73 g, 8.4 mmol) and dioxane (20 mL) were added to a 250 mL round bottom flask. It was allowed to react with stirring for 2 h. Then, it was filtered to remove the precipitated solid residue and amine **3** (1.12 mL, 7 mmol) was added, under stirring, over the filtrate liquid. It was left to react at room temperature for 16 h. The resulting solid residue was filtered off and the solvent removed at the rotary evaporator. AcOEt was added and washed with acetic acid (10%), Na₂CO₃ (5%) and NaCl (sat.). The organic phase was dried with MgSO₄, filtered and the solvent was removed at the rotary evaporator. Compound **5** was used in the next step without further purification.

### Step B)

Dioxane (6.7 mL) and HCl (3.3 mL, 37%) were added to the round bottom flask containing compound **5.** It was left to shake for 1 h at room temperature. Subsequently, 20 mL of H₂O were added and Na₂CO₃ was added in small portions, observing the generation of bubbling, until the aqueous solution had a pH > 7. The resulting solution was saturated with NaCl and extracted with AcOEt (3 × 20 mL). The organic phase was dried with MgSO4 and the solvent removed at the rotary evaporator. Compound **6** was used in the next step without purification.

### Step C)

Bromoacetic acid (164 mg, 1.18 mmol), N-hydroxy succinimide (140 mg, 1.22 mmol), DCC (293 mg, 1.42 mmol) and dioxane (5 mL) were added to a 250 mL round bottom flask. It was left to react with stirring for 2 h. Then, it was filtered to remove the precipitated solid residue and amine 6 (254 mg; 1.18 mmol) was added, under stirring, over the filtrate liquid. It was left to react at room temperature for 16 h. The resulting solid residue was filtered off which was compound 7, which was used in the next step without further purification (202 mg; 51% yield).

### Example 4: Synthesis of 4-amno-2-nitro benzyl methanol (Compound 8)

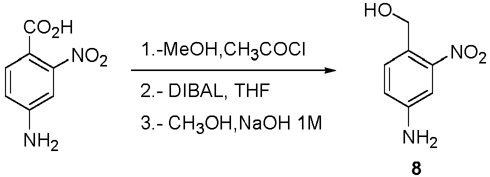

In a 250 mL flask, at 0 °C, 200 mL of methanol and dropwise acetyl chloride (3 mL) were added. Over the solution of hydrogen chloride in methanol, 4-amino-2-nitrobenzoic acid (2.35 g, 13 mmol) was added and the mixture was heated at reflux for 24 hours. After completion of the esterification, which can be followed by TLC (AcOEt/Heptane 1/1, Rf: 0.6) the solvent was removed under reduced pressure and the product redissolved in THF (100 mL). The mixture was cooled to 0 °C with an ice bath and a solution of diisobutylaluminum hydride (Dibal, 1.2 M, 54 mL, 65 mmol, 5 eq.) was added dropwise. After completion of the addition, the 0 °C bath was removed and the reaction left at room temperature with stirring overnight. The reaction was stopped by addition of methanol (7 mL) at 0 °C (ice bath), then a sodium hydroxide solution (1M, 150 mL) was added. The aqueous phase was extracted with ethyl acetate (3 × 200 mL) and washed with a saturated sodium chloride solution (200 mL). The organic layer was dried with anhydrous magnesium sulfate. A yellow solid (2.1 g, Rf = 0.3 AcOEt/Heptane 1/1) was obtained and purified by column chromatography (AcOEt/Heptane 1/1 - 2/1) yielding 1.8 g of 4-amino-2-nitrobenzylmethanol (82% yield). ¹H-NMR (300 MHz, DMSO-d₆) *δ* = 7.38 (d, J = 8.4 Hz, 1H), 7.16 (d, J = 1.4 Hz, 1H), 6.87 (dd, J = 8.4, 1.4 Hz, 1H), 5.64 (s, 2H), 5.17 (t, J = 5.3 Hz, 1H), 4.61 (d, J = 5.3 Hz, 2H). ¹³C-NMR (75 MHz, DMSO-d₆) *δ* = 148.6 (C), 147.9 (C), 129.6 (CH), 124.0 (C), 118.6 (CH), 108.0 (CH), 59.8 (CH₂).

### Example 5: Synthesis of Compound 9

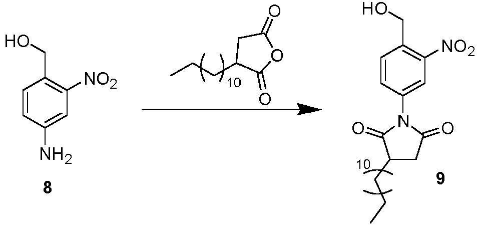

In a 50 ml acetube, 1 gram of the alcohol **8** (6 mmol), 1.65 grams of the anhydride (6.87 mmol, 1.1 eq.) and 25 ml of dry dioxane were added. The mixture was stirred at 75°C for 16 hours. After this time, the mixture was firstly brought to dryness and secondly placed under vacuum in an oil bath at 140°C for two hours.

Once the polyethylene model is attached to the photolabile molecule, the resulting compound 9 can be condensed with different groups via the hydroxyl group to prepare several different photolabile derivatives, as shown in Examples 6 and 7 below.

### Example 6: Synthesis of photosensitive o-nitrobenzyl derivative 10

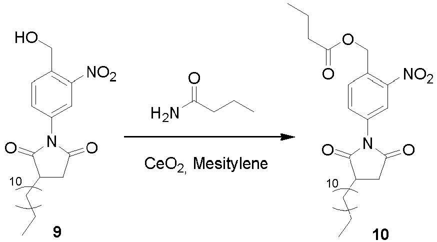

A mixture of the amide (5 mmol, 1 eq.) and compound **9** (5 mmol) is placed in an acetube together with 1.1 grams of cerium dioxide. The mixture is subjected to several vacuum-nitrogen cycles followed by the addition of mesitylene. The mixture is stirred for 20 hours at 170 °C. After this time, the mixture is cooled and purified by column chromatography using a hexane/ethyl acetate mixture.

### Example 7: Synthesis of photosensitive o-nitrobenzyl derivative 11

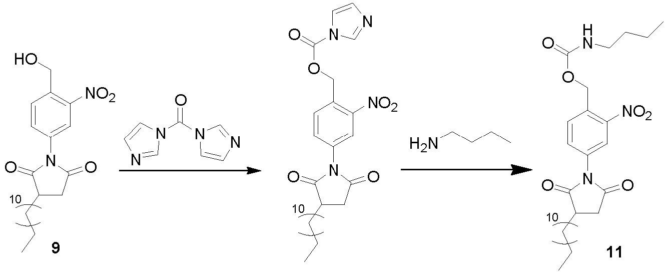

In a 50 ml flask, compound 9 (1 mmol) and 1,1'-carbonyldiimidazole (2 mmol, 2 eq.) are added followed by cycles of vacuum-nitrogen. Once dry and in nitrogen atmosphere, dichloromethane is added as solvent and the mixture is left to stir for two hours. After this time, the amine (1 mmol, 1 eq.) is added and the mixture is left stirring for another two hours. Once the reaction is completed, it is taken to dryness and washed with water to obtain the title compound.

### Example 8: Synthesis of photosensitive o-nitrobenzyl derivative 12

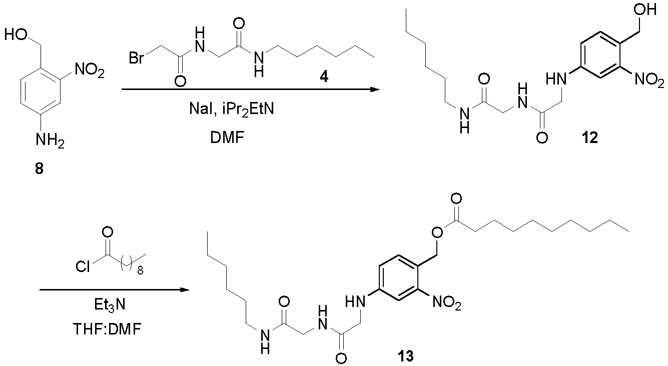

### Step A)

In a two-neck flask under N₂ atmosphere, the compound **8** (0.5 g; 2.62 mmol), bromide **4** (0.95 g; 3.4 mmol), N-ethyl-N,N-diisopropylamine (2.28 mL, 13.1 mmol), Nal (392 mg; 2.62 mmol) and DMF (15 mL) are added. The mixture is heated to 70°C and allowed to react under stirring for 16 h. Then, it is cooled, water is added and the mixture extracted with AcOEt (3 × 15 mL). The organic layer is washed with NaCl solution (sat.) to remove DMF residues. It is dried with MgSO₄ and the solvent removed at the rotary evaporator. The product is treated with a solution of Hex:AcOEt (1:1) to boiling and filtered.

### Step B)

Compound **12** (366 mg; 0.94 mmol), Et₃N (171 µL; 1.22 mmol) and THF (10 mL) are added to a two-necked flask under N₂ atmosphere. DMF is added dropwise until completely dissolved. Decanoyl chloride (253 µL, 1.22 mmol) is subsequently added dropwise and allowed to react at room temperature for 16 h. Water is added and the mixture extracted with water. Water is added and the mixture extracted with AcOEt (3 × 10 mL). The organic layer is dried with Mg₂SO₄, filtered and the solvent removed at the rotary evaporator. The product is purified by column chromatography.

### Example 9: Synthesis of photosensitive coumarin derivative 16.

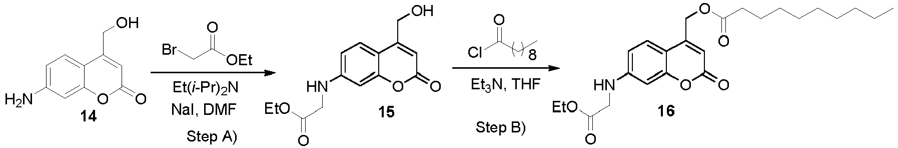

### Step A)

Compound **14** was obtained as disclosed in B. Curten et al., Photochemistry and Photobiology 2005, 81, 641-648.

Compound 14 (0.5 g, 2.6 mmol), ethyl bromoacetate (2.9 mL, 26 mmol), N-ethyl-N,N-diisopropylamine (2.28 mL, 13 mmol), Nal (0.39 g, 2.6 mmol) and DMF (10 mL) were added to a two-necked flask under N₂ atmosphere. It was heated to 70°C and allowed to react with stirring for 16 h. It was cooled, water was added and the mixture extracted with AcOEt (3 × 15 mL). The organic phase was washed with NaCl solution (sat.) to remove DMF residues. It was dried with MgSO₄ and the solvent removed at the rotary evaporator. Compound 15 was used in the next step without purification (0.57 g; 79% yield). ¹H NMR (300 MHz, DMSO-*d*₆) *δ* = 7.39 (d, *J* = 8.7 Hz, 1H), 6.95 (t, *J* = 6.3 Hz, 1H), 6.62 (dd, *J* = 8.7, 2.3 Hz, 1H), 6.44 (d, *J* = 2.3 Hz, 1H), 6.10 (s, 1H), 5.51 (t, *J =* 5.5 Hz, 1H), 4.66 (d, *J* = 5.5 Hz, 2H), 4.14 (q, *J =* 7.1 Hz, 2H), 4.03 (d, *J* = 6.3 Hz, 2H), 1.21 (t, *J =* 7.1 Hz, 3H). ¹³C NMR (75 MHz, DMSO) *δ* = 170.5 (C), 161.0 (C), 157.0 (C), 155.4 (C), 151.8 (C), 124.8 (CH), 110.3 (CH), 106.9 (C), 104.4 (CH), 97.1 (CH), 60.5 (CH₂), 59.1 (CH₂), 44.2 (CH₂), 14.1 (CH₃).

### Step B)

Compound 15 (465 mg, 1.68 mmol), Et₃N (307 µL, 2.18 mmol) and THF (15 mL) were added to a two-necked flask under N₂ atmosphere. Decanoyl chloride (384 µL, 1.85 mmol) was subsequently added dropwise and allowed to react at room temperature for 16 h. Water was added and the mixture extracted with AcOEt (3 × 10 mL). The organic phase was dried with Mg₂SO₄, filtered and the solvent was removed at the rotary evaporator to give compound **16** (0.62 g, 1.4 mmol, 83% yield) without need for further purification. ¹H NMR (300 MHz, Methanol-*d*₄) *δ* = 7.44 (d, *J* = 8.8 Hz, 1H), 6.68 (dd, *J* = 8.8, 2.3 Hz, 1H), 6.46 (d, *J* = 2.3 Hz, 1H), 6.10 (s, 1H), 5.31 (d, *J* = 1.3 Hz, 2H), 4.24 (q, *J* = 7.1 Hz, 2H), 4.03 (s, 2H), 2.48 (t, *J* = 7.4 Hz, 2H), 1.68 (t, *J* = 7.4 Hz, 2H), 1.50-1.15 (m, 12H), 1.04-0.73 (m, 3H).

### Example 10: Synthesis of photosensitive coumarin derivative 18.

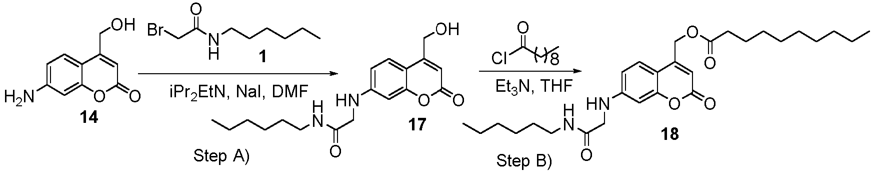

### Step A)

Compound 14 (1 g, 5.23 mmol), compound **1** (5.8 g, 26.2 mmol), N-ethyl-N,N-diisopropylamine (4.56 mL, 26.2 mmol), Nal (0.783 g, 5.23 mmol) and DMF (15 mL) were added to a two-necked flask under N₂ atmosphere. It was heated to 70°C and left to react with stirring for 16 h. It was cooled, water was added and the mixture extracted with AcOEt (3 × 15 mL). The organic phase was washed with NaCl solution (sat.) to remove DMF residues. It was dried with MgSO₄ and the solvent removed at the rotary evaporator. Column chromatography in Hex:AcOEt (1:1) was carried out to obtain the compound 17 (0.57 g; 33% yield). ¹H NMR (300 MHz, DMSO-d₆) *δ* = 7.96 (t, *J* = 5.7 Hz, 1H), 7.38 (d, *J* = 8.8 Hz, 1H), 6.89 (t, *J* = 6.0 Hz, 1H), 6.59 (dd, *J* = 8.8, 2.2 Hz, 1H), 6.36 (d, *J* = 2.2 Hz, 1H), 6.08 (s, 1H), 5.50 (t, *J =* 5.5 Hz, 1H), 4.65 (d, *J* = 5.6 Hz, 2H), 3.72 (d, *J* = 5.9 Hz, 2H), 3.07 (q, *J* = 6.5 Hz, 2H), 1.48 1.30 (m, 2H), 1.39 - 1.02 (m, 6H), 0.97 - 0.58 (m, 3H). ¹³C NMR (75 MHz, DMSO-d₆) *δ* = 168.9 (C), 161.0 (C), 157.0 (C), 155.4 (C), 151.9 (C), 124.7 (CH), 110.5 (CH), 106.7 (C), 104.2 (CH), 96.9 (CH), 59.0 (CH₂), 46.0 (CH₂), 38.5 (CH₂), 31.0 (CH₂), 29.1 (CH₂), 26.0 (CH₂), 22.0 (CH₂), 13.9 (CH₃).

### Step B)

Compound **17** (165 mg, 0.5 mmol), Et₃N (120 µL, 0.85 mmol) and THF (5 mL) were added to a two-necked flask under N₂ atmosphere. DMF was added dropwise until compound **17** was completely dissolved. Decanoyl chloride (155 µL, 0.75 mmol) was subsequently added dropwise and allowed to react at room temperature for 16 h. Water was added and the mixture extracted with AcOEt (3 × 10 mL). The organic phase was dried with MgSO₄, filtered and the solvent was removed at the rotary evaporator. Column chromatography in Hex:AcOEt (2:1) was carried out to obtain compound **18** (134 mg; 55% yield). ¹H NMR (300 MHz, DMSO-d₆) *δ* = 7.95 (t, *J* = 5.9 Hz, 1H), 7.38 (d, *J* = 8.8 Hz, 1H), 6.97 (t, *J* = 6.0 Hz, 1H), 6.60 (dd, *J* = 8.8, 2.3 Hz, 1H), 6.37 (s, 1H), 5.96 (s, 1H), 5.23 (s, 2H), 3.72 (d, *J* = 5.9 Hz, 2H), 3.06 (q, *J* = 6.5 Hz, 2H), 2.42 (t, *J* = 7.3 Hz, 2H), 1.54 (t, *J* = 7.2 Hz, 2H), 1.44-1.28 (m, 2H), 1.28-1.10 (m, 18H), 0.95-0.62 (m, 6H). ¹³C NMR (75 MHz, DMSO-*d*₆) *δ* = 172.9 (C), 169.3 (C), 160.9 (C), 156.1 (C), 152.7 (C), 151.2 (C), 125.5 (CH), 111.1 (CH), 106.8 (C), 105.9 (CH), 97.4 (CH), 61.5 (CH₂), 46.4 (CH₂), 38.9 (CH₂), 33.7 (CH₂), 31.7 (CH₂), 31.5 (CH₂), 29.5 (CH₂), 29.3 (CH₂), 29.13 (CH₂), 29.09 (CH₂), 28.9 (CH₂), 26.5 (CH₂), 24.8 (CH₂), 22.54 (CH₂), 22.50 (CH₂), 14.4 (CH₃), 14.3 (CH₃).

### Example 11: Synthesis of photosensitive coumarin derivative 20.

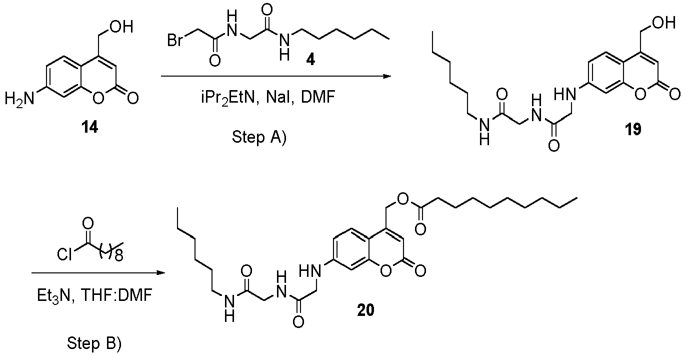

### Step A)

Compound 14 (0.5 g, 2.62 mmol), compound **4** (0.95 g, 3.4 mmol), N-ethyl-N,N-diisopropylamine (2.28 mL, 13.1 mmol), Nal (392 mg; 2.62 mmol) and DMF (15 mL) were added to a two-necked flask under N₂ atmosphere. It was heated to 70°C and allowed to react with stirring for 16 h. It was cooled, water was added and the mixture extracted with AcOEt (3 × 15 mL). The organic phase was washed with NaCl solution (sat.) to remove DMF residues. It was dried with MgSO4 and the solvent removed at the rotary evaporator. It was treated with a solution of Hex:AcOEt (1:1) under boiling and then filtered. Compound **19** was obtained as a solid (0.378 g; 37% yield). ¹H NMR (300 MHz, DMSO-*d*₆) *δ* = 8.15 (t, *J* = 5.0 Hz, 1H), 7.74 (t, *J* = 4.7 Hz, 1H), 7.36 (d, *J* = 8.7 Hz, 1H), 7.02-6.79 (m, 1H), 6.75-6.52 (m, 1H), 6.39 (s, 1H), 6.07 (s, 1H), 5.49 (t, *J =* 5.6 Hz, 1H), 4.64 (d, *J =* 5.6 Hz, 2H), 3.80 (d, *J* = 5.9 Hz, 2H), 3.67 (d, *J* = 5.7 Hz, 2H), 3.01 (q, *J* = 6.6 Hz, 2H), 1.55-1.26 (m, 2H), 1.29-1.03 (m, 6H), 0.82 (t, *J* = 6.4 Hz, 3H).

### Step B)

Compound **19** (366 mg, 0.94 mmol), Et₃N (171 µL, 1.22 mmol) and THF (10 mL) were added to a two-necked flask under N₂ atmosphere. DMF was added dropwise until compound **19** was completely dissolved. Decanoyl chloride (253 µL, 1.22 mmol) was subsequently added dropwise and allowed to react at room temperature for 16 h. Water is added and the mixture extracted with AcOEt (3 × 10 mL). The organic phase was dried with MgSO₄, filtered and the solvent was removed at the rotary evaporator. Column chromatography in AcOEt was carried out to obtain compound **20** (0.245 g; 48% yield). ¹H NMR (300 MHz, DMSO-*d*₆) *δ* = 8.17 (t, *J* = 4.7 Hz, 1H), 7.74 (t, *J =* 5.1 Hz, 1H), 7.40 (d, *J =* 8.9 Hz, 1H), 7.00 (t, *J =* 6.0 Hz, 1H), 6.63 (d, *J* = 9.0 Hz, 1H), 6.41 (s, 1H), 5.97 (s, 1H), 5.25 (s, 2H), 3.82 (d, *J* = 5.9 Hz, 2H), 3.67 (d, *J = 5.8* Hz, 2H), 3.01 (q, *J* = 6.5 Hz, 2H), 2.48 - 2.34 (m, 2H), 1.73 - 1.44 (m, 2H), 1.41 - 1.06 (m, 20H), 0.83 (t, *J* = 6.4 Hz, 6H). ¹³C NMR (75 MHz, DMSO-*d*₆) *δ* = 172.5 (C), 169.5 (C), 168.3 (C), 160.5 (C), 155.6 (C), 152.3 (C), 150.8 (C), 125.2 (CH), 110.7 (CH), 106.4 (C), 105.5 (CH), 97.1 (CH), 61.1 (CH₂), 45.8 (CH₂), 42.0 (CH₂), 38.5 (CH₂), 33.3 (CH₂), 31.3 (CH₂), 31.0 (CH₂), 29.1 (CH₂), 28.9 (CH₂), 28.70 (CH₂), 28.66 (CH₂), 28.5 (CH₂), 26.1 (CH₂), 24.4 (CH₂), 22.11 (CH₂), 22.06 (CH₂), 13.94 (CH₃), 13.89 (CH₃).

### Example 12: Cleavage of photosensitive coumarin derivative 16.

Coumarin derivative **16** (22 mg, 0.05 mmol) was dissolved in MeOH (0.5 mL). The solution was irradiated with a lamp at a wavelength of 365 nm for 16 h. After this time, decomposition of the molecule was observed, leading only to decanoic acid as reaction product.

### Example 13: Cleavage of photosensitive coumarin derivative 18.

Coumarin derivative **18** (20 mg, 0.041 mmol) was dissolved in DMSO-d₆ (0.5 mL). The solution was irradiated with a lamp at a wavelength of 365 nm for 16 h. After this time, decomposition of the molecule was observed, leading only to decanoic acid and a derivative of amine **3** as reaction products.

### Example 14: Cleavage of photosensitive coumarin derivative 20.

Coumarin derivative 20 (20 mg, 0.037 mmol) was dissolved in DMSO-d₆ (0.5 mL). The solution was irradiated with a lamp at a wavelength of 365 nm for 16 h. After this time, decomposition of the molecule was observed, leading only to decanoic acid and a derivative of amine **6** as reaction products.

### B. ADHESIVE

### Example 15: Synthesis of adhesive based on PA-PE functionalized coumarine derivative (Compound 23):

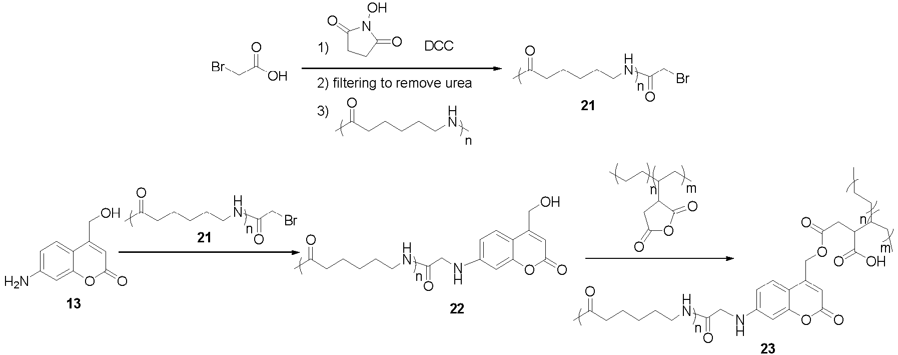

Polyamide-6 (PA6) bromide derivative **21** was obtained by the same method as in Example 1, using PA6 (Ultramid^{®} B from BASF) instead of n-hexylamine.

### Step A)

In a glass reactor with mechanical stirring and temperature control, 5 g of polyamide-6 (PA6) bromide derivative **21** and 50 ml of dimethylformamide (DMF) were added. The mixture was heated to 100°C to partially dissolve the polyamide. Then, 1 g of coumarin compound **13** dissolved in 10 ml of DMF and 675 mg of N,N-diisopropylethylamine were added and stirred for 4 h at this temperature, allowing the reaction of the amino group of the coumarin compound with the brominated methylene of the functionalized polyamide. After this time, the solution was cooled to room temperature and the polyamide-functionalized coumarine **22** was precipitated in 100 ml of cold hexane. The solid obtained was filtered, washed with ethanol to remove unreacted amine and coumarin residues and dried in a vacuum oven at 60 °C for 12 hours. Coumarin grafting was confirmed by FTIR, observing bands characteristic of the bonds formed (1640-1750 cm-¹ for ester or amide) and the disappearance of the signals associated with the amino group of the coumarin compound.

### Step B)

In a second stage, in a glass reactor with mechanical stirring and temperature control, 10 g of commercial PE-g-MA (5% by weight of MA grafting - Fusabond E226 from DOW) in powder form was added together with 50 ml of DMF. The polymer was brought to melt between 80-110°C and compound **22** was added. To facilitate the chemical interaction, a 10wt.% solution of zinc chloride in DMF was prepared and 1 mL of this solution and a coupling agent, toluene diisocyanate (TDI, 0.5 wt.%), were added. The product was mixed in an internal mixer at 60 rpm at a temperature of 190-220 °C for 2 hours, promoting the reaction between the functional groups of PE-g-MA and compound **22.** The resulting material was cooled to room temperature and crushed into small fragments. Subsequently, it was washed with hot ethanol (60-70°C) to remove traces of unreacted reagents and dried in a vacuum oven at 60°C for 24 hours. The final product **23** was characterized by FTIR, confirming the formation of ester and carboxylic acid bonds.

This same reaction can be carried out with EVA-g-MA, instead of PE-g-MA. The resulting adhesive could be compatible with EVA and EVOH films in addition to polyolefin films.

### Example 16: Synthesis of adhesive based on PE functionalized o-nitrobenzyl derivative (Compound 25)

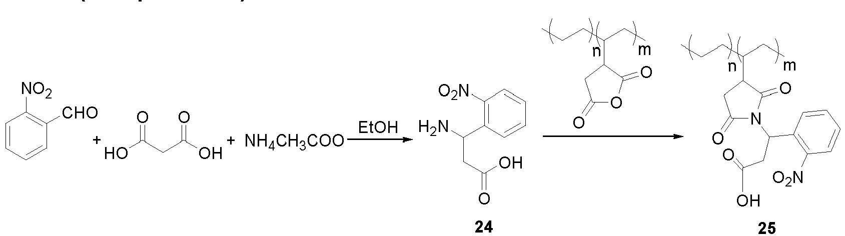

### Step A)

O-nitrobenzaldehyde (20.4 g, 0.135 mol), formic acid (20.3 ml, 0.539 mol) and malonic acid (18.3 g, 0.176 mol) were stirred at 45°C for half an hour. Ammonium formate (21.3 g, 0.338 mol) was then added to the mixture. The reaction temperature was raised to 70°C and stirred for 1 hour, and then stirred at 95°C for another 4 hours. Concentrated hydrochloric acid (50 ml) was then added and stirred further maintaining this temperature for another 1 hour. The reaction mixture was cooled. 25 ml of water was added and washed twice with ethyl acetate (2×25 ml). The aqueous layer was adjusted to pH 4.2 with 50% potassium hydroxide solution. A solid precipitated. It was pump filtered and dried under vacuum to give a yellow solid, 18.33 g, in 64.6% yield.

### Step B)

In a glass reactor equipped with mechanical stirring and temperature control, 10 g of polyethylene grafted with maleic anhydride (PE-g-MA, 5% by weight maleic anhydride - Fusabond E226 from DOW) was added as pellets together with 50 mL of N,N-Dimethylformamide (DMF) as solvent. The mixture was heated to a temperature of 80-110 °C to melt the polymer and facilitate its dispersion in the medium. In parallel, a solution of 1 g of 3-amino-3-(2-nitrophenyl)propanoic acid **26** in 10 mL of DMF was prepared, 0.5 mL triethylamine was added. The solution compound **26** was added in a slow and controlled manner to the reactor, maintaining constant stirring to ensure homogeneity of the reaction. The temperature was maintained in the range of 80-110 °C for 4-6 hours, allowing the reaction between the anhydride groups of the PE-g-MA and the amino groups of compound **24.** This reaction led to the formation of amide bonds incorporating the nitrobenzyl group into the polymer in compound **25.** At the end of the reaction time, the mixture was poured into 100 mL of cold hexane to precipitate compound **25.** The precipitated solid was recovered by filtration and washed with ethanol to remove possible traces of reacted reagents. Finally, the product was dried in a vacuum oven at 60 °C for 12-24 h, ensuring complete removal of residual solvents.

Functionalization of the polymer was confirmed by FTIR spectroscopy. In the spectra, bands characteristic of nitro groups were observed in the 1510-1550 cm-¹ (asymmetric vibration) and 1340-1380 cm-¹ (symmetric vibration) regions, in addition to the disappearance or reduction of the bands corresponding to the anhydride groups of PE-g-MA (1780-1850 cm-¹). Bands associated with the newly formed bonds were also detected, such as those of the amide bonds (1640-1700 cm-¹), thus confirming the successful grafting of the nitrobenzyl group.

### C. MULTILAYER LAMINATE

### Example 17: Preparation and cleavage of multilayer laminates using Compounds 23 and 25 as adhesives for PE and PA layers

### General process for the manufacture of multilayer laminates

The polymeric films used in the final multilayer (e.g. PE, PA, PET, photosensitive adhesive (Compounds **23** and **25** were used), etc.) were obtained by compression in a hot plate press. For example, 10 g of polymer powder (or previously crushed pellets) were placed between two non-stick Teflon sheets, located inside a 10 cm × 10 cm metal mold. The assembly was introduced into a hydraulic hot plate press previously heated above the melting temperature of the polymers to be molded (e.g. 180 °C for polyolefins, 150 °C for photosensitive adhesive, 260°C for polyesters or polyamides, etc.). An initial pressure of 2 MPa was applied for 2 minutes to allow precompaction of the material and removal of air bubbles. Subsequently, the pressure was increased to 10 MPa and maintained for 5 minutes to ensure the formation of a uniform film. Once the time had elapsed, the mold was removed from the hot plates and rapidly cooled to room temperature by means of a circulating water cooling system, maintaining the pressure applied to avoid deformation.

The film obtained, with a thickness of approximately 100-200 µm, was carefully separated from the Teflon sheets and stored in a desiccated environment to avoid moisture absorption. The quality of the film was verified by visual inspection and thickness uniformity tests with a precision micrometer.

To obtain a three-layer polymeric multilayer material with polyethylene (PE - ELITE 5401G from DOW), photosensitive adhesive obtained in example 15 (compound **23**) or example 16 (compound **25**) above, as an adhesion layer, and polyamide (PA - PA6 Ultramid^{®} B from BASF) as an outer layer, films of the materials were cut as slats with dimensions of 10 cm × 5 cm. The layer arrangement was: PE as the outer layer, photosensitive adhesive as the middle layer and PA as another outer layer. The slats were carefully cleaned to remove impurities using a dry cloth and preconditioned in a desiccated environment to avoid moisture absorption by the PA. The stack of films was placed in the jaw of a plastic sealer set at a temperature of 200 °C, suitable to melt the PE and adhesive, but without degrading the PA. A constant pressure of 1.5 MPa was applied for 15 seconds to ensure melting of the outer PE layers with the adhesive and PA.

Subsequently, the multilayer was cooled to room temperature while maintaining the applied pressure to avoid residual stresses or delamination. The final product, with a total thickness of approximately 500 µm (with an adhesive layer thickness of 148 µm), was inspected visually and by scanning optical microscopy, to verify uniformity and absence of bubbles or defects. In addition, interlayer adhesion tests were performed by manual peel tests, confirming an adequate bond between the layers.

### Separation of the layers in the multilayer laminate

The peel test was carried out using a universal testing machine equipped with a 100 N load cell. Specimens 25 mm wide and 100 mm long were prepared from the obtained three-layer material (PE-photosensitive adhesive of example 15 or 16-PA), making sure that the edges were uniform to avoid concentrated stresses. Prior to testing, one of the outer layers (PA) was manually separated by a few millimeters at one end to facilitate clamping in the machine grips. The specimen was mounted so that one jaw clamped the PE layer and the other jaw clamped the PA layer, leaving the intermediate layer of photosensitive adhesive as a bonding zone. A constant travel speed of 100 mm/min was applied to perform 180° angle peeling. During the test, the peeling force was recorded as a function of the distance traveled and a force-displacement curve was obtained. From this curve, the average adhesion force during peeling was calculated, which was higher than 4.5 N/25 mm (for both photosensitive adhesives of example 15 and 16), indicating an adequate adhesion between the layers, as it was compared to the peel strength presented by a specimen fabricated under the same conditions with commercial PE-g-MA as adhesive. Inspection of the surfaces after the test showed a combination of cohesive (rupture within the photosensitive adhesive) and adhesive failure (separation between the adhesive and the layers), confirming the effectiveness of the photosensitive adhesive used.

Once the suitability of the adhesive for the manufacture of multilayer laminates was confirmed, the weld or adhesion zone was irradiated under a 370 nm UV lamp for 24 h and the peel test was repeated.

The mechanical properties data obtained before and after can be seen in the table below:

| **Tensile mechanical properties** | **PE** | **PA6-66** | **PE-PA** (without adhesive) | **PE-PEgMA-PA** (commercial adhesive) | **PE-Comp. 23-PA** (Adhesive Ex. 15) | **PE-Comp. 25-PA** (Adhesive Ex. 16) |
|---|---|---|---|---|---|---|
| **Before irradiation** | | | | | | |
| **Moduus (MPa)** | 197±26 | 523±60 | 310±26 | 420±16 | 359±29 | 351±53 |
| **Maximum stress (MPa)** | 17±2 | 31±6 | 12±3 | 22±2 | 17±3 | 19±1 |
| **% Breakage** | 1052±21 | 162±32 | 38±20 | 197±13 | 200±110 | 218±60 |

| **After irradiation** | | | | | | |
|---|---|---|---|---|---|---|
| **Moduus (MPa)** | 195±8 | 439±22 | 499±100 | 365±44 | 45±21 | 60±6 |
| **Maximum stress (MPa)** | 19±2 | 39±2 | 15±7 | 16±1 | 6±3 | 4±2 |
| **% Breakage** | 1159±44 | 281±10 | 167±100 | 187±40 | 50±10 | 21±8 |

The drop in mechanical properties show how the bond weakened after irradiation. Further, the breakage was only at the interface, resulting in delamination.

## Claims

1. Photolabile agent comprising a photolabile molecule substituted with two different groups, wherein one of the groups is an oligomer or polymer selected from polyolefin, polyamide, polyester, polystyrene, PVC, EVOH, EVA and polycarbonate oligomers or polymers, and the other group is either a different oligomer or polymer selected from polyolefin, polyamide, polyester, polystyrene, PVC, EVOH, EVA and polycarbonate oligomers or polymers, or a functional group selected from carboxylic acid, carboxylic acid anhydride, acid halide, ester, amide, ketone, amine and alcohol.

2. Photolabile agent according to claim 1, wherein the photolabile molecule comprises a photolabile group selected from a 4-coumarinylmethyl group, an o-nitrobenzyl group, a 2-(o-nitrophenyl)ethyl group and a p-hydroxyphenacyl group.

3. Photolabile agent according to any one of claim 1 or 2, wherein the photolabile molecule comprises a photolabile group and two linkers binding the photolabile group to each of the two different groups in the photolabile agent.

4. Photolabile agent according to claim 3, wherein the linkers are independently selected from a covalent bond; a C₁₋₆ alkylene group optionally interrupted by and/or terminated in -O-, -OC(O)-, -OC(O)O-, -OC(O)NR'-, -NR'-, -NR'C(O)-, -NR'C(O)O-, -C(O)-, - C(O)O-, -C(O)NR'-, and optionally substituted by halogen, C₁₋₆ haloalkyl, C₆₋₁₀ aryl, (C₆₋₁₀)aryl(C₁₋₆)alkyl, CN, NO₂, -N(Rₐ)(R_{b}), -OR_{c}, -C(O)R_{d}, -C(O)ORₑ, -C(O)N(R_{f})(R_{g}) or -OC(O)Rₕ; wherein R', Rₐ, R_{b}, R_{c}, R_{d}, Rₑ, R_{f}, R_{g} and Rₕ are independently selected from hydrogen and C₁₋₆ alkyl; a succinimide or a maleimide.

5. Photolabile agent according to any one of claim 1 to 4, wherein the photolabile molecule is a compound of formula (II), (II'), (III), (III'), (IV), (V) or (VI) 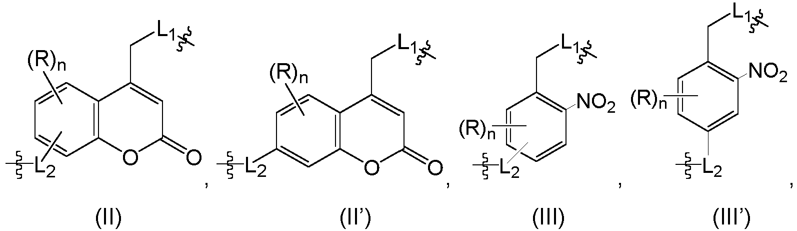 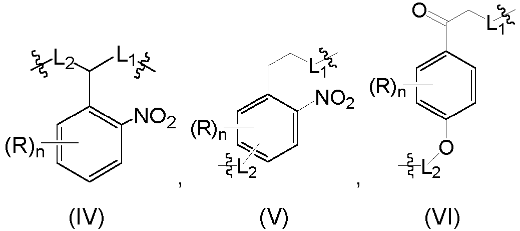 wherein
L₁ and L₂ are different and are independently selected from a covalent bond, -(CH₂)ₚ-, -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -NR'-, *-NR'-(CH₂)ₚ-, *-NR'-(CH₂)ₚ-C(O)-, *-NR'C(O)-, *-NR'-C(O)-(CH₂)ₚ-, *-NR'C(O)O-, *-NR'C(O)O-(CH₂)ₚ-, *-OC(O)-CH₂-CH(COOH)-, *-OC(O)-CH(CH₂COOH)-, -C(O)-, *-C(O)-(CH₂)ₚ-, *-C(O)-(CH₂)ₚ-C(O)-, *-C(O)O-, *-C(O)O-(CH₂)ₚ-, *-C(O)O-(CH₂)ₚ-C(O)-, *-C(O)NR'-, *-C(O)NR'-(CH₂)ₚ-, *-C(O)NR'-(CH₂)ₚ-C(O)-, *-(CH₂)ₚ-C(O)-, *-(CH₂)ₚ-C(O)O-, *-(CH₂)ₚ-C(O)NR'-, 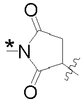
and 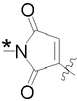
; wherein each R' is independently selected from hydrogen and C₁₋₆ alkyl; p is 1, 2, 3, 4 or 5; and * means the point of attachment to the photolabile group;
each R is independently selected from halogen, C₁₋₆ alkyl, -OR" and -NR"₂;
n is 0, 1, 2 or 3;
each R" is independently selected from hydrogen and C₁₋₆ alkyl; and 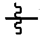 represents the bond that is the point of attachment to the two different groups in the photolabile agent.

6. Photolabile agent according to claim 5, wherein:
L₁ is selected from -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -NR'-, *-NR'-(CH₂)ₚ-, *-NR'-(CH₂)ₚ-C(O)-, *-NR'C(O)-, *-NR'-C(O)-(CH₂)ₚ-, *-NR'C(O)O-, *-NR'C(O)O-(CH₂)ₚ-, *-OC(O)-CH₂-CH(COOH)-, *-OC(O)-CH(CH₂COOH)-, 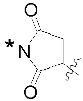 and 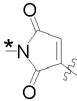 ; and
L₂ is selected from a bond, -(CH₂)ₚ-, -NR'-, *-NR'-(CH₂)ₚ-, *-NR'-(CH₂)ₚ-C(O)-, *-NR'-C(O)-, *-NR'-C(O)-(CH₂)ₚ-, *-NR'C(O)O-, *-NR'C(O)O-(CH₂)ₚ-, -O-, *-O-(CH₂)ₚ-, *-O-(CH₂)ₚ-C(O)-, *-OC(O)-, *-OC(O)-(CH₂)ₚ-, -OC(O)O-, *-OC(O)O-(CH₂)ₚ-, *-OC(O)NR'-, *-OC(O)NR'-(CH₂)ₚ-, -C(O)-, *-C(O)O-, *-C(O)NR'-, *-(CH₂)ₚ-C(O)-, 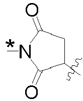 and

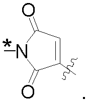

7. Photolabile agent according to any one of claims 1 to 6, wherein one of the different groups in the photolabile agent is a polyolefin oligomer or polymer and the other one is a polyamide oligomer or polymer, a polyester oligomer or polymer or a functional group selected from carboxylic acid, carboxylic acid anhydride, acid halide, ester, amide, ketone, amine and alcohol.

8. An adhesive for multilayer laminates comprising a photolabile agent as defined in any one of claims 1 to 7.

9. Use of a photolabile agent as defined in any one of claims 1 to 7, as an adhesive such as an adhesive for multilayer laminates.

10. Use of a photolabile agent as defined in any one of claims 1 to 7 or an adhesive according to claim 8 for the manufacture of a multilayer laminate material.

11. Multilayer laminate material comprising at least one first polymeric film or layer, at least one second polymeric film or layer, and at least one adhesive layer sandwiched therebetween, wherein the adhesive layer comprises the photolabile agent as defined in any one of claims 1 to 7 or the adhesive as defined in claim 8.

12. Multilayer laminate material according to claim 11, wherein the multilayer laminate material is for packaging food, cosmetics or pharmaceuticals.

13. Multilayer laminate material according to any one of claims 11 or 12, wherein the first and second polymeric substrate or film comprise independently a polymer selected from the group consisting of polyolefin, polyamide, polyester, polystyrene, PVC, EVOH, EVA, polycarbonate.

14. Method of producing the multilayer laminate material according to any one of claims 11 to 13, comprising:
(a) providing at least one first polymeric film or layer and at least one second polymeric film or layer, and
(b) adhering the at least one first polymeric film or layer and the at least one second polymeric film or layer together by using the photolabile agent as defined in any one of claims 1 to 7 or the adhesive as defined in claim 8.

15. Method for separating the at least one first polymeric film or layer and the at least one second polymeric film or layer in a multilayer laminate material as defined in claim 13, wherein the method comprises irradiating the multilayer laminate material with UV light.
